# FASCICULE DE BREVET EUROPEEN

(11) **EP 2 958 702 B1**
(45) Date de publication et mention de la délivrance du brevet: **07.12.2016**
(21) Numéro de dépôt: 14711812.9
(22) Date de dépôt: 20.02.2014
(51) Int. Cl.: B23K 26/08, H01B 13/34

(54) **SYSTÈME DE MARQUAGE DE CÂBLE À ZONE DE MARQUAGE COURBE**
VORRICHTUNG ZUM KABELMARKIEREN MIT EINEM GEBOGENEN MARKIERBEREICH
SYSTEM FOR MARKING A CABLE HAVING A ARCUATE MARKING AREA

(30) Priorité: 20.02.2013 FR 1351466
(43) Date de publication de la demande: 30.12.2015
(73) Titulaire: Laselec, 31100 Toulouse (FR)
(72) Inventeur: REVERSAT, Fabien, F-31770 Colomiers (FR); ROUGIER, Stéphane, F-31450 Pompertuzat (FR); BOUVET, Pierre, F-31000 Toulouse (FR)
(74) Mandataire: Santarelli
(86) Numéro de dépôt international: PCT/FR2014/050347
(87) Numéro de publication internationale: WO 2014/128406

(56) Documents cités:
- EP-A2- 0 415 674
- DE-A1- 3 147 230
- GB-A- 2 301 315
- US-A- 5 474 627

## Description

La présente invention concerne le marquage de câbles par faisceau laser tel que décrit dans le document US-A-5 474 627. Ce type de marquage permet de créer de manière rapide et efficace des repères (alphanumériques, code barre ou autres motifs) de manière permanente et inaltérable sur les gaines des câbles, tels que les câbles électriques ou autre.

Le marquage peut par exemple consister en une ablation de matière. Il peut aussi consister en une décoloration de la gaine du câble.

Dans le cas de la décoloration, des lasers ultraviolets (UV) peuvent être utilisés pour frapper des gaines de câbles dopées en pigment de Dioxyde de Titane. C'est notamment le cas dans les applications aéronautiques.

Indépendamment du type de procédé utilisé (ablation, décoloration ou autre), plusieurs techniques de marquage peuvent être mises en oeuvre.

Une première technique peut consister à utiliser un laser d'énergie relativement forte avec une cadence de tir relativement faible (de l'ordre de quelques Hertz à quelques dizaines de Hertz). Le faisceau laser peut être mis en forme à l'aide d'un masque d'amplitude utilisé comme un « pochoir », dont l'image est projetée sur la surface du câble via des moyens optiques. Avec cette première technique, chaque tir laser (dont la durée est généralement de quelques nanosecondes) permet la génération d'un caractère (par exemple alphanumérique) entier.

Une deuxième technique peut consister à utiliser un laser d'énergie relativement faible avec une cadence de tir élevée (de l'ordre de quelques kilohertz à plusieurs centaines de kilohertz). Le faisceau laser peut être focalisé et balayé sur la surface du câble à l'aide d'un système de déflexion. Avec cette deuxième technique, chaque caractère (par exemple alphanumérique) est pixélisé et est généré à l'aide d'un grand nombre de tirs laser.

Indépendamment de la technique utilisée, le marquage de câble, pour être productif, nécessite généralement d'être effectué à la volée. Un élément de déflexion optique est prévu pour permettre au faisceau laser de suivre le câble pendant le marquage d'un repère (constitué d'un ou plusieurs motifs ou caractères) puis de se repositionner rapidement en début de zone de marquage pour le marquage du repère suivant. Cela permet de faire défiler le câble à très grande vitesse et de le marquer à une vitesse artificiellement ralentie.

Pour ce marquage de câble à la volée, il est connu d'utiliser une zone de marquage rectiligne, dans laquelle le câble qui défile est guidé de la meilleure façon possible. L'opération de déflexion du faisceau laser au-dessus de la zone de marquage peut être réalisée à l'aide d'un miroir galvanométrique associé à un objectif à champ plat, permettant de former une image nette dans le plan de la surface supérieure du câble sur toute la longueur de la zone de marquage.

Dans le cas de la deuxième technique évoquée plus haut, une tête de balayage dans un plan XY, composée de deux miroirs galvanométriques, permet d'effectuer à la fois le balayage du faisceau pour écrire chaque motif ou caractère, et le suivi du câble selon sa direction de défilement. L'objectif à champ plat permet de focaliser le faisceau laser dans le plan de la surface du câble.

D'une manière générale, la deuxième technique de marquage évoquée plus haut (utilisant le balayage d'un faisceau laser haute fréquence) s'est généralisée dans de nombreuses applications industrielles. Elle bénéficie des avantages suivants par rapport à la première technique (mettant en oeuvre un laser de forte énergie, faible fréquence et un masque d'amplitude) :
- polyvalence des motifs marqués : leur taille et leur forme peuvent être choisies librement, plutôt qu'imposés par un masque.
- rendement optique meilleur : le faisceau n'étant pas obstrué par un masque d'amplitude, toute l'énergie est utile au processus de marquage. Si l'on considère par exemple le marquage de la lettre « l » ou d'une barre de code barre, le rendement de transmission à travers le masque de la première technique peut être inférieur à 10%, alors qu'il n'y a aucune perte d'énergie si l'on utilise la deuxième technique,

- compatibilité avec les sources laser à haute cadence, pompées par diodes laser continues, caractérisées par une très grande fiabilité et une maintenance réduite,
- durée de vie des composants optiques de transport et mise en forme du faisceau plus importante (notamment pour le marquage UV) : à puissance moyenne équivalente, le vieillissement des optiques est moins critique dans le cas de faibles énergies et fortes cadences que dans le cas de fortes énergies et faibles cadences.

L'application de cette deuxième technique au marquage des câbles électriques est cependant particulièrement problématique, notamment en ce qui concerne la qualité des motifs obtenus lors d'un marquage du câble à la volée. Il est en effet extrêmement difficile d'éviter les vibrations du câble lors de son défilement dans la zone de marquage rectiligne, notamment les mouvements transverses à la direction de défilement ou les mouvements de rotation autour de cet axe. Ceux-ci, même infimes, provoquent une déformation des caractères marqués, puisque le marquage d'un caractère n'est pas instantané comme dans le cas de la première technique évoquée.

Ce problème est d'autant plus accru sur les câbles de section non parfaitement circulaire comme les câbles monobrins enrubannés ou, de manière encore plus sévère, sur les câbles multifilaires torsadés.

Si l'on considère par exemple une source laser de cadence 10 kHz, l'intervalle de temps entre chaque tir est de l'ordre de 100 microsecondes. S'il faut 200 tirs pour écrire un caractère de dimension de l'ordre d'un millimètre, la durée de l'opération est de 20 millisecondes.

La période de torsade d'un câble multifilaire torsadé blindé est généralement comprise entre 5 millimètres et 50 millimètres. Si le câble défile à une vitesse de 1 mètre par seconde, la période temporelle des vibrations subies par le câble à cause de ses caractéristiques géométriques sera de l'ordre de 5 à 50 millisecondes.

Cet exemple basé sur des chiffres en lien avec les performances des systèmes de marquage laser des câbles aéronautiques montre que les échelles de temps correspondant au marquage d'un caractère et la période des vibrations sont du même ordre de grandeur.

Il y a donc un risque important de distorsion des caractères dès lors que l'amplitude des vibrations n'est pas négligeable devant la dimension des caractères marqués.

La dimension des caractères marqués en pratique est généralement de l'ordre de un à quelques millimètres.

L'amplitude des vibrations dépend des câbles et de la façon de les guider dans la zone de marquage, mais elle atteint parfois plusieurs dixièmes de millimètres dans une zone de marquage rectiligne, ce qui entraîne une déformation importante des caractères et affecte la lisibilité des repères ou code-barres.

Le problème de déformation des caractères limite considérablement l'utilisation industrielle de la deuxième technique, bien qu'elle présente de nombreux avantages par rapport aux autres techniques.

La vibration du câble dans la zone de marquage est aussi problématique dans le cas de la première technique évoquée plus haut. En effet, la vibration du câble affecte l'alignement des différents caractères les uns par rapport aux autres, puisque l'échelle de temps entre deux tirs LASER est de quelques millisecondes ou dizaines de millisecondes.

Il existe donc un besoin pour améliorer les techniques de marquage de câble par laser, notamment eu égard aux problèmes évoqués ci-dessus.

La présente invention s'inscrit dans ce cadre.

Un **premier aspect** de l'invention concerne un système de marquage de câble selon la revendication 1.

La courbure du câble permet de contrôler le défilement du câble de sorte à minimiser les vibrations de celui-ci et éviter les déformations de marquage provoquées par de telles vibrations.

La courbure imposée au câble dans la zone de marquage peut être circulaire, elliptique, parabolique ou autre.

Il peut être possible d'imprimer au câble une tension mécanique au moyen d'un dispositif de tension de câble.

Le système peut en outre comporter au moins un dispositif de maintien de câble configuré pour maintenir ledit câble au niveau dudit au moins un dispositif de tension de câble.

Le dispositif peut ainsi permettre de plaquer le câble contre le dispositif de courbure de câble.

Le contrôle du défilement du câble est ainsi renforcé.

Le système peut en outre comporter au moins un dispositif de guidage de câble configuré pour guider ledit câble, au moins dans ladite zone de marquage.

Un tel dispositif de guidage permet par exemple de disposer la zone de marquage proche de zones où celui-ci est soumis à des contraintes mécaniques comme par exemple une zone de coupe. La compacité du système s'en trouve améliorée.

Le dispositif d'entrainement peut comporter un revêtement adhérant en contact avec ledit câble.

Ainsi, l'entraînement du câble est amélioré.

Par exemple, la surface extérieure d'une roue, contre laquelle est plaqué le câble, peut comporter un revêtement adhérant permettant d'éviter le glissement du câble. Ceci est particulièrement utile dans le cas où les dispositifs de courbure et d'entraînement sont combinés.

Par exemple, le dispositif d'entraînement peut comporter au moins une courroie d'entraînement configurée pour entraîner ledit câble.

Par exemple encore, le dispositif d'entraînement comporte au moins un couple de courroies d'entraînement se faisant face et configurées pour accueillir ledit câble entre elles. Le câble est ainsi pris en sandwich entre les courroies.

Le dispositif d'entraînement et le dispositif de tension de câble peuvent être intégrés en un même dispositif.

Ainsi, le système est plus compact.

C'est le cas par exemple d'une roue entraînant le câble tout en lui imprimant une courbure.

Le système s'en trouve réduit.

Selon des exemples de réalisation, le dispositif de courbure comporte au moins une portion de roue.

Ainsi, une roue complète peut être utilisée ou seulement une portion de celle-ci.

L'utilisation d'une portion de roue permet d'utiliser un rayon de courbure plus important tout en gardant des dimensions réduites du système.

Par exemple, la portion de roue est configurée pour laisser glisser ledit câble dans ladite zone de marquage.

Par exemple encore, la portion de roue comporte une pluralité de roulements pour faire rouler ledit câble dans ladite zone de marquage.

Par exemple, le dispositif de maintien de câble peut comporter une pluralité de roulements. Ces roulements peuvent être régulièrement espacés et/ou organisés selon la courbure du dispositif de courbure. Par exemple, avec l'utilisation d'une roue comme dispositif de courbure, les roulements peuvent être organisés en arc de cercle de manière à maintenir parfaitement le câble à entraîner.

Selon des réalisations, la portion de roue est configurée pour laisser glisser une courroie d'entraînement du câble dans ladite zone de marquage.

Par exemple, la portion de roue comporte une pluralité de roulements pour faire rouler ladite au moins une courroie dans ladite zone de marquage.

La portion de roue peut être fixe. On peut alors prévoir des moyens d'entraînement combinés avec celle-ci pour entraîner le câble.

Le dispositif d'entraînement peut aussi comporter une roue configurée pour entrer en mouvement de rotation.

On peut alors mettre le câble en mouvement tout en tendant le câble.

Par exemple, la roue est en mouvement de rotation libre ou entraînée par un moteur. La trajectoire imposée au câble est alors circulaire.

La roue peut également supporter une courroie, entraînée ou non, contre laquelle est appuyé le câble, et qui lui impose sa courbure.

Selon des réalisations, le dispositif laser est configuré pour émettre au moins un faisceau laser dans une direction perpendiculaire au plan de ladite au moins une portion de roue.

Le système peut alors être plus compact.

Par exemple, le dispositif laser est configuré pour émettre au moins un faisceau laser se déplaçant en fonction du défilement dudit câble.

Par exemple, le dispositif laser est configuré pour déplacer le faisceau dans un plan parallèle à un plan de défilement du câble dans la zone de marquage.

Le balayage du faisceau laser peut être effectué de manière rapide et produire le marquage dans un plan parallèle au plan de défilement du câble dans la zone de marquage.

Dans le plan de marquage, englobant la surface du câble, la trajectoire du faisceau laser peut suivre la trajectoire courbe du câble imposée par le dispositif de courbure.

Selon des exemples de réalisation, le dispositif de marquage est constitué d'un laser, d'éléments optiques de mise en forme du faisceau laser, d'un couple de miroirs galvanométriques permettant de balayer le faisceau selon les deux axes d'un plan, et d'un objectif à champ plat, permettant de focaliser le faisceau dans un plan, le plan de marquage.

Le système peut en outre comporter un dispositif de tension de câble, configuré pour imprimer une tension mécanique audit câble dans ladite zone de marquage de câble.

Par exemple, le dispositif de tension de câble et le dispositif d'entraînement peuvent être intégrés en un même dispositif.

Par exemple, un jeu de poulies peut servir à la fois à entraîner le câble et à lui imprimer une tension mécanique.

Le système peut en outre comporter le dispositif de marquage laser.

Un **deuxième aspect** de l'invention concerne un procédé de marquage de câble selon la revendication 15.

Le procédé peut en outre comporter des étapes d'utilisation de moyens du système selon le premier aspect.

Le procédé peut en outre comporter l'une ou plusieurs des étapes suivantes :
- déroulement dudit câble chargé sur bobine, et maintien de la tension de ce dernier au cours de son défilement,
- guidage dudit câble dans ladite zone de marquage à l'aide dudit dispositif de courbure du câble, et
- marquage d'au moins une portion dudit câble dans ladite zone de marquage.

Le procédé selon le deuxième aspect de l'invention procure au moins les mêmes avantages que ceux procurés par le système selon le premier aspect.

Selon des réalisations du système ou du procédé selon les premier et deuxième aspects, ledit faisceau laser est normal audit plan de marquage.

D'autres caractéristiques et avantages de l'invention apparaîtront à la lecture de la présente description détaillée qui suit, à titre d'exemple non limitatif, et des figures annexées parmi lesquelles:
- la **figure 1** illustre schématiquement un mode de réalisation général;
- les **figures 2a** et **2b** illustrent des marquages déformé et non déformé;
- les **figures 3-7** illustrent des modes de réalisation plus particuliers.

Dans la description qui suit, des modes de réalisation sont décrits dans le cadre du marquage par balayage du faisceau. Ces modes de réalisation, permettent d'éviter la déformation des caractères marqués à la volée lors du défilement du câble dans la zone de marquage.

Chaque élément présenté dans chaque mode de réalisation peut, le cas échéant, être mis en oeuvre dans un autre mode de réalisation.

Les domaines d'application de ces modes de réalisation sont notamment:
- le marquage par décoloration de la gaine des câbles électriques aéronautiques à l'aide d'une source LASER UV impulsionnelle en régime nanoseconde,
- le marquage de la gaine des câbles électriques ou fibres optiques noire, blanche ou colorée à l'aide d'une source LASER impulsionnelle de longueur d'onde UV, visible ou bien infrarouge,
- le marquage de la gaine des câbles électriques ou fibres optiques noire, blanche ou colorée à l'aide d'une source LASER continue de longueur UV, visible ou bien infrarouge,
- le marquage LASER de la surface de tous types de fils, cordons, gaines, tubes ou tuyaux flexibles non conducteurs d'électricité.

Les marquages réalisables au moyen de ces modes de réalisation sont notamment :
- le marquage par décoloration du matériau,
- le marquage par ablation et modification des propriétés de réflectance du matériau traité,
- le marquage de caractères alphanumériques filaires ou par remplissage avec ou sans contour,
- le marquage de codes-barres,
- le marquage de codes-barres 2D (data matrix),
- le marquage de logos ou sigles,
- le marquage de graduations,
- le marquage à l'aide d'un ou plusieurs faisceau(x) laser focalisé(s) sur la surface du fil,
- le marquage à l'aide d'un faisceau laser dont la distribution spatiale à été optimisée (« top-hat »).

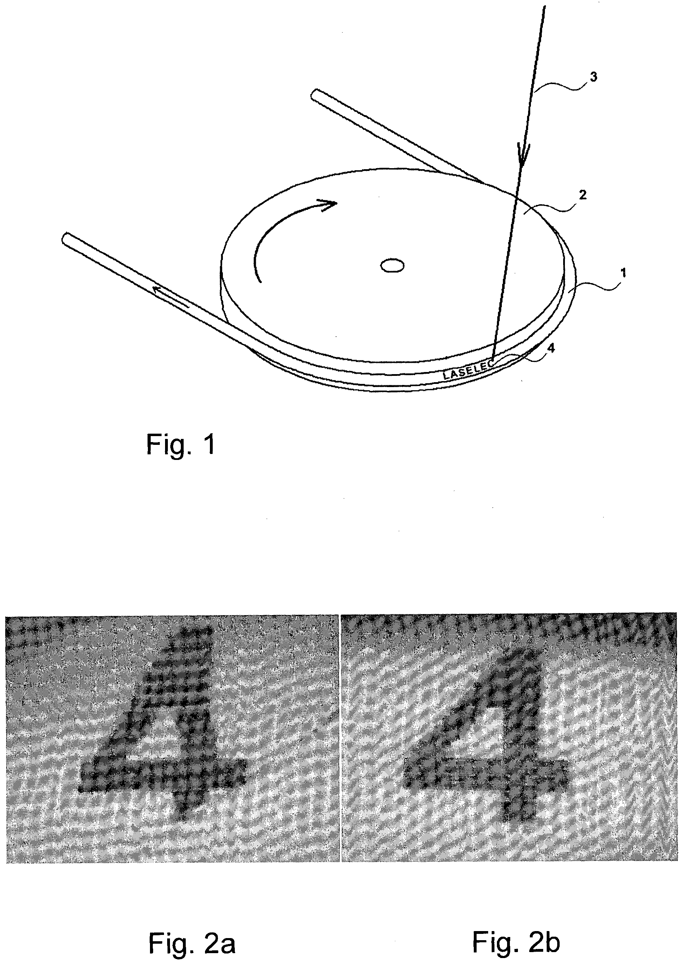

Un mode de réalisation général est présenté en référence à la **figure 1****.** Un câble 1 est tendu et défile sur une roue 2 en rotation autour de son axe de rotation. La roue est utilisée comme une poulie. Un faisceau laser 3 issu d'un dispositif laser (non représenté) frappe le câble pour réaliser un marquage 4 (LASELEC).

Le marquage du câble est effectué par suivi (ou balayage) du câble par le faisceau laser selon la trajectoire courbée imprimée au câble dans une zone de marquage. Ici, le câble suit un arc de cercle (formé par une portion de l'arc de la roue sur lequel est tendu le câble) constituant la zone de marquage. Le marquage s'effectue dans un plan parallèle au plan de la roue et contenant la surface du câble. Le faisceau laser est issu d'un système de déflexion piloté par le système, sa direction est proche de la normale au plan de la roue. Le faisceau laser est balayé pour marquer chaque caractère du repère.

Le câble étant courbé sur la roue, il ne peut vibrer et évolue de manière contrôlée sur l'arc de cercle constituant la zone de marquage. Ceci est le cas pour la plupart des types de câble, notamment les câbles enrubannés et les câbles multifilaires torsadés, puisque leur forme ondulée épouse le contour circulaire de la roue et qu'ils tournent avec elle.

La roue utilisée a préférentiellement une circularité la meilleure possible, notamment pour les câbles de très petits diamètres.

Le câble peut aussi être entraîné par un ou plusieurs dispositifs d'entraînement (non représentés). Alternativement, ou en combinaison, la roue peut être motorisée.

Alternativement, ou en combinaison, un dispositif de tension de câble (non représenté) peut être prévu pour imprimer une tension mécanique au câble. Ainsi, le maintien de celui-ci peut être assuré ou amélioré.

Par exemple, un ou plusieurs dispositifs de déroulement de câble peuvent être utilisés pour libérer progressivement le câble. Le câble est alors libéré au fur et à mesure qu'il est entraîné par ledit dispositif d'entraînement. Le câble peut par exemple être initialement enroulé sur une bobine et déroulé progressivement. Durant la libération progressive du câble, celui-ci est maintenu sous tension mécanique.

Un dispositif de maintien (non représenté) peut être prévu pour maintenir le câble au niveau de la roue. Ainsi, le câble peut être plaqué contre la roue.

Ainsi, selon des réalisations, le câble est entraîné par un dispositif d'entraînement et maintenu tendu (par exemple par le dispositif de déroulement lui-même). Le câble est par exemple plaqué contre le flanc extérieur du dispositif de courbure dans la zone de marquage. La zone de marquage peut englober toute la zone de courbure du câble ou une partie seulement.

En subissant une force d'appui transverse à sa direction de défilement, le câble suit une trajectoire contrôlée et évite ainsi les vibrations risquant de provoquer une déformation du marquage.

La **figure 2a** représente un résultat de marquage à la volée classique obtenu sur un câble monofilaire enrubanné guidé dans une zone de marquage rectiligne. Du fait de mouvements vibratoires du câble celui-ci a en effet dévié de sa position transversale idéale au cours du marquage à la volée du caractère. Il en résulte une déformation du caractère (« 4 ») marqué.

La **figure 2b** représente un résultat de marquage à la volée selon des modes de réalisation obtenu sur le même type de câble. Le caractère marqué (« 4 ») n'a subi aucune déformation, car le câble n'a pas dévié de sa position transversale idéale au cours du marquage.

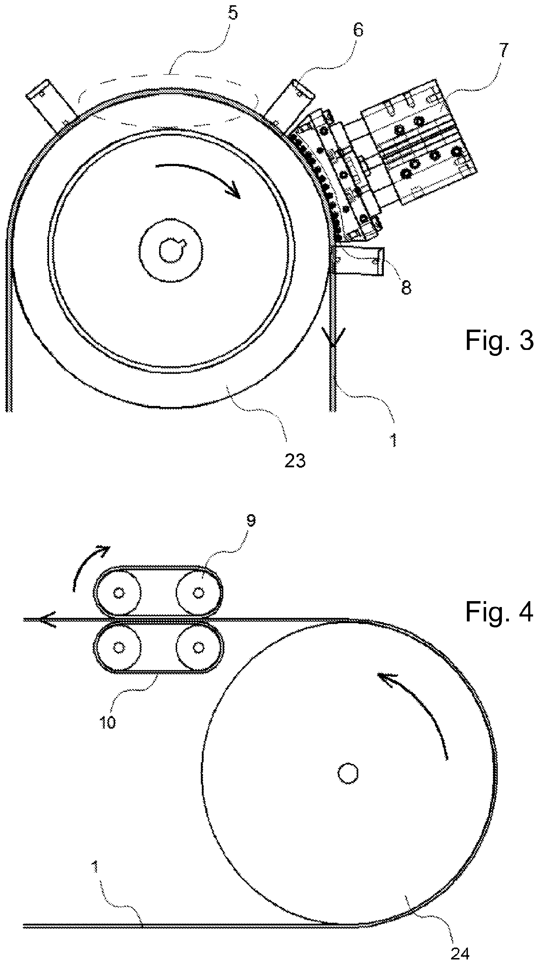

Dans le mode de réalisation illustré par la **figure 3** (qui reprend les éléments de la figure 1 avec les mêmes signes de référence), la roue 23 sert à la fois de guidage et d'entraînement du câble 1.

La roue est motorisée (moteur non représenté). Pour améliorer l'entrainement du câble, la roue peut être recouverte d'un revêtement (par exemple en polyuréthane) présentant de bonnes caractéristiques d'adhérence et de résistance à l'usure. En outre, un système de placage du câble 7 peut être associé à la roue de manière à combiner dans un même dispositif les deux fonctions de courbure du câble et d'entraînement de celui-ci.

Le faisceau laser (non représenté) est défléchi par une tête de balayage dans un plan XY. La tête de balayage comporte par exemple deux miroirs galvanométriques. Le faisceau laser est par exemple focalisé à l'aide d'un objectif optique à champ plat, dont le plan focal est parallèle au plan de la roue et confondu avec la surface du câble.

Le marquage à la volée s'effectue en mode rotation dans la zone de marquage 5 située entre un, deux ou plus dispositif(s) 6 de guidage du câble.

Le système de placage du câble comporte par exemple un vérin associé à un dispositif adapté au diamètre extérieur de la roue. Le système de placage peut en outre comporter des roulements 8. Ce système permet de presser le câble contre la surface latérale de la roue, tout en permettant son défilement, de manière à ce que la roue motorisée puisse entraîner le câble sans glissement.

L'écartement entre les différentes roulettes 8 peut être non régulier et optimisé de sorte à permettre un contact optimal sur l'enveloppe extérieure des câbles multifilaires torsadés quelle que soit la période des torsades et quelle que soit leur position.

Ce mode de mise en oeuvre présente l'avantage, outre la possibilité d'éviter la déformation des caractères (quel que soit le type de câble), de disposer d'une zone de marquage très proche de la zone de coupe du câble (non représentée) située en aval de la zone d'entraînement (au niveau du dispositif de placage). Il est en effet souhaitable de réduire cette distance sur les machines de marquage et coupe de câbles, de sorte à minimiser les longueurs de câbles perdues (le début du câble installé ne peut être marqué et constitue une chute).

Ce mode de mise en oeuvre permet en outre d'éviter toute déformation des caractères liée à des vibrations longitudinales du câble (micro « à-coups » dans la direction de défilement), parfois générées par les systèmes d'entraînement de câble à poulies crantées et courroies, utilisés majoritairement dans les machines de marquage de câble actuelles.

Dans le mode de réalisation illustré par la **figure 4****,** qui reprend les éléments de la figure 1 avec les mêmes références, le marquage laser du câble 1 s'effectue sur une roue 24 non motorisée qui peut tourner librement.

L'entraînement du câble s'effectue à l'aide d'un dispositif d'entraînement à poulies 9 et courroies 10 enserrant le câble en « sandwich ».

Le dispositif d'entraînement est configuré en sorte à éviter la génération de vibrations longitudinales du câble, qui affecteraient la qualité des marques au même titre que les vibrations transverses dans une zone de marquage linéaire.

D'autres systèmes d'entraînement peuvent être utilisés. Le câble peut être par exemple rembobiné sur une bobine motorisée, le marquage s'effectuant sur la roue 2 tournant librement, entraînée par le défilement du câble.

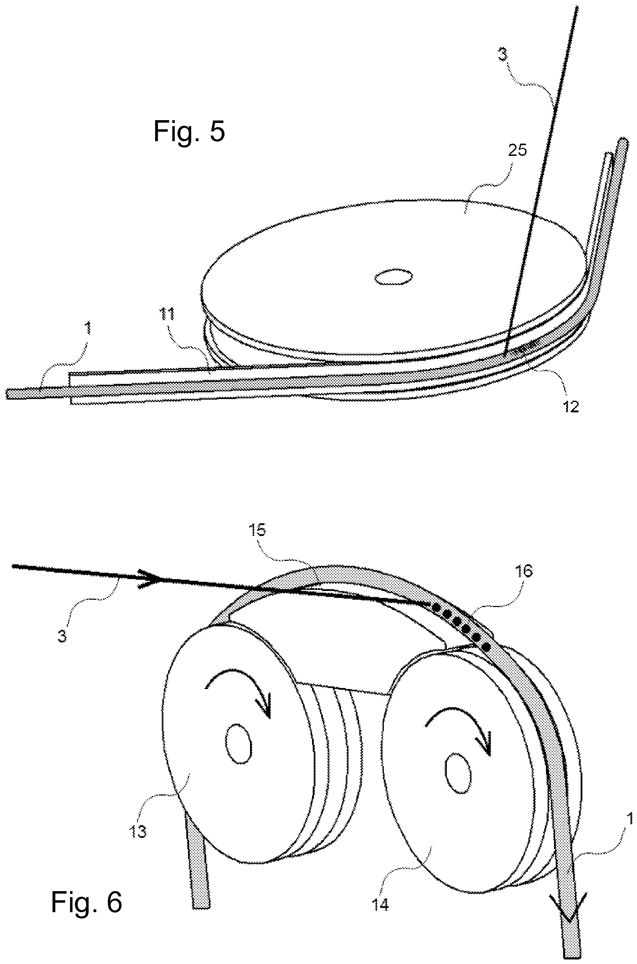

Dans le mode de réalisation illustré par la **figure 5****,** qui reprend les éléments de la figure 1 avec les mêmes signes de référence, le câble 1 est en contact avec une courroie 11, qui est elle-même en contact avec la roue 25. C'est cette dernière qui impose la courbure du câble sur un arc de cercle et permet d'éviter tout mouvement transverse durant le marquage laser.

Le faisceau laser 3 provient du dessus et est focalisé dans le plan parallèle au plan de la roue passant par la surface du câble. Un balayage du faisceau laser permet le marquage à la volée de toute sorte de motifs, comme par exemple un code-barres 12.

L'utilisation d'une courroie peut permettre de simplifier le remplacement des pièces d'usure et/ou de coupler le guidage sur roue à un système d'entraînement de type « poulies - courroies » comme représenté sur la figure 4.

La roue peut être fixe ou être motorisée et constituer le système d'entraînement de la courroie. Un système du serrage du câble contre la courroie peut alors être ajouté.

Dans le mode de réalisation illustré par la **figure 6****,** qui reprend les éléments de la figure 1 avec les mêmes signes de référence, le câble 1 est marqué sur le côté d'un arc de roue, mais celle-ci est cette fois fixe. Dans cet exemple, la roue est tronquée et se résume à une pièce mécanique 15 formée par une surface latérale courbe sur laquelle le câble 1 glisse tout en épousant sa forme.

Des poulies 13 et 14 participent au guidage du câble. Elles permettent au câble de rester plaqué contre la surface extérieure de la pièce courbe tout en défilant.

Le marquage laser s'effectue de la même manière que décrit précédemment, c'est-à-dire sur un arc de cercle suivant la surface du câble. Ici les marquages 16 sont des motifs circulaires pleins. Ils ont été réalisés dans la zone de marquage correspondant à la partie centrale de la pièce de guidage. Les motifs se déplacent avec le câble vers la sortie de la zone de marquage. Le faisceau laser 3 réalise les opérations de balayage et de suivi du câble pendant son déroulement. Il se trouve dans la position extrême de la zone de marquage pour le marquage du dernier motif constituant le repère et, une fois le repère terminé, est repositionné au début de la zone de marquage pour commencer le marquage du repère suivant.

Ce mode de mise en oeuvre présente l'avantage d'une plus grande compacité, notamment si l'on désire disposer d'une zone de marquage de grande longueur (qui impliquerait un grand diamètre de roue).

Dans le cas précis de ce mode de mise en oeuvre la surface courbe de guidage du câble n'est pas nécessairement circulaire mais peut avoir un autre type de courbure par exemple elliptique, parabolique ou autre.

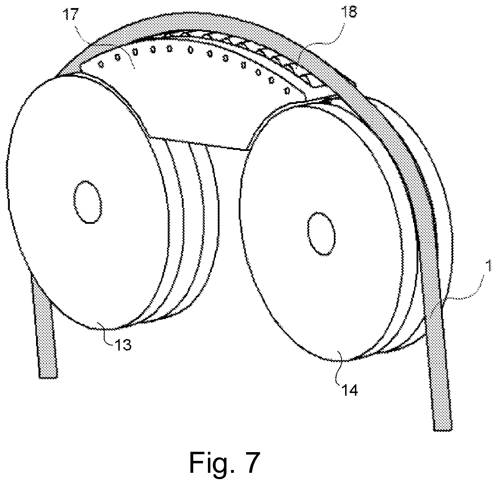

Dans le mode de réalisation de la **figure 7****,** qui reprend les éléments de la figure 1 avec les mêmes signes de référence, au lieu de glisser sur la face courbe lisse de la « roue tronquée » 15 de la figure 6, le câble 1 défile sur un dispositif de guidage 17 comportant un certain nombre de roulements 18.

Les roulements sont organisés pour former une enveloppe en contact avec la surface du câble tendu sur le dispositif, dont la forme courbe permet un guidage de ce dernier sans possibilité de mouvement transverse parasite.

La taille et l'écartement des roulettes peuvent être non régulier et optimisés de sorte à guider parfaitement les câbles à surface irrégulière comme les câbles électriques torsadés.

La présente invention a été décrite et illustrée dans la présente description détaillée en référence aux figures jointes. Toutefois la présente invention ne se limite pas aux formes de réalisation présentées. D'autres variantes, modes de réalisation et combinaisons de caractéristiques peuvent être déduits et mis en oeuvre par la personne du métier à la lecture de la présente description et des figures dans le cadre de l'étendue de la protection définie par les revendications.

Dans les revendications, le terme "comporter" n'exclut pas d'autres éléments ou d'autres étapes. L'article indéfini « un » n'exclut pas le pluriel. Les différentes caractéristiques présentées et/ou revendiquées peuvent être avantageusement combinées. Leur présence dans la description ou dans des revendications dépendantes différentes, n'exclut pas en effet la possibilité de les combiner. Les signes de référence ne sauraient être compris comme limitant la portée de l'invention.

## Revendications

1. Système de marquage de câble comportant :
- au moins un dispositif laser,
- au moins une zone de marquage (5) pour marquer une portion de câble (1) par ledit au moins un dispositif laser,
- au moins un dispositif d'entraînement de câble (2, 9, 10, 11, 13, 14) configuré pour faire défiler ledit câble dans ladite au moins une zone de marquage, et
**caractérisé par**
- au moins un dispositif de courbure de câble (2, 15, 17) configuré pour courber ledit câble dans ladite au moins une zone de marquage,
dans lequel ledit au moins un dispositif laser est configuré pour émettre au moins un faisceau laser, qui dans le plan de marquage englobant la surface dudit câble, suit la trajectoire courbe du câble imposée par le dispositif de courbure.

2. Système selon la revendication 1, dans lequel ledit faisceau laser est normal audit plan de marquage.

3. Système selon l'une des revendications précédentes, dans lequel ledit au moins un dispositif d'entrainement comporte un revêtement adhérant en contact avec ledit câble.

4. Système selon l'une des revendications précédentes, dans lequel ledit au moins un dispositif d'entraînement comporte au moins une courroie d'entraînement (9, 10, 11) configurée pour entraîner ledit câble.

5. Système selon la revendication 4, dans lequel ledit au moins un dispositif d'entraînement comporte au moins un couple de courroies d'entraînement (9, 10) se faisant face et configurées accueillir ledit câble entre elles.

6. Système selon l'une des revendications précédentes, dans lequel ledit dispositif d'entraînement et ledit dispositif de courbure de câble sont intégrés en un même dispositif (2).

7. Système selon l'une des revendications précédentes, dans lequel ledit au moins un dispositif de courbure comporte au moins une portion de roue (15, 17).

8. Système selon la revendication 7, dans lequel ladite au moins une portion de roue (15, 17) est configurée pour laisser glisser ledit câble dans ladite zone de marquage.

9. Système selon la revendication 7, dans lequel ladite portion de roue (17) comporte une pluralité de roulements pour faire rouler ledit câble dans ladite zone de marquage.

10. Système selon la revendication 7 en combinaison avec la revendication 4 ou 5, dans lequel ladite au moins une portion de roue (25) est configurée pour laisser glisser ladite au moins une courroie dans ladite zone de marquage.

11. Système selon la revendication 10, dans lequel ladite portion de roue comporte une pluralité de roulements pour faire rouler ladite au moins une courroie dans ladite zone de marquage.

12. Système selon l'une des revendications 7 à 11, dans lequel ladite au moins une portion de roue (15, 25) est fixe.

13. Système selon l'une des revendications précédentes, dans lequel ledit au moins un dispositif d'entraînement comporte au moins une roue (2, 23, 24, 25, 13, 14) configurée pour entrer en mouvement de rotation.

14. Système selon l'une des revendications précédentes, dans lequel ledit dispositif laser est configuré pour émettre au moins un faisceau laser se déplaçant en fonction du défilement dudit câble.

15. Procédé de marquage de câble comportant une étape :
- d'entraînement dudit câble pour le faire défiler dans une zone de marquage,
et **caractérisé par** les étapes suivantes
- de courbure dudit câble dans ladite zone de marquage, et
- de marquage d'au moins une portion dudit câble dans ladite zone de marquage, par au moins un dispositif laser émettant au moins un faisceau laser, qui dans le plan de marquage englobant la surface dudit câble, suit la trajectoire courbe du câble dans la zone de marquage.

## Patentansprüche

1. Kabelmarkierungssystem mit:
- mindestens einer Laservorrichtung,
- mindestens einem Markierungsbereich (5) zur Markierung eines Kabelteils (1) durch die mindestens eine Laservorrichtung,
- mindestens eine Kabelantriebsvorrichtung (2, 9, 10, 11, 13, 14), die dazu ausgelegt ist, das Kabel in dem mindestens einen Markierungsbereich zum Durchtreten zu bringen, und
**gekennzeichnet durch**
- mindestens eine Kabelkrümmungsvorrichtung (2, 15, 17), die zum Krümmen des Kabels in dem mindestens einen Markierungsbereich ausgelegt ist, in der die mindestens eine Laservorrichtung zum Aussenden mindestens eines Laserstrahls ausgelegt ist, der in der die Oberfläche des Kabels umfassenden Markierungsebene der **durch** die Krümmungsvorrichtung vorgegebenen, gekrümmten bzw. kurvenförmigen Bahn des Kabels folgt.

2. System nach Anspruch 1, bei dem der Laserstrahl normal zur Markierungsebene ist.

3. System nach einem der vorhergehenden Ansprüche, bei dem die mindestens eine Antriebsvorrichtung eine haftende Beschichtung in Kontakt mit dem Kabel aufweist.

4. System nach einem der vorhergehenden Ansprüche, bei dem die mindestens eine Antriebsvorrichtung mindestens einen zum Antreiben des Kabels ausgelegten Antriebsriemen (9, 10, 11) aufweist.

5. System nach Anspruch 4, bei dem die mindestens eine Antriebsvorrichtung mindestens ein Paar Antriebsriemen (9, 10) aufweist, die sich gegenüberliegen und dazu ausgelegt sind, das Kabel zwischen sich aufzunehmen.

6. System nach einem der vorhergehenden Ansprüche, bei dem die Antriebsvorrichtung und die Kabelkrümmungsvorrichtung in dieselbe Vorrichtung (2) integriert sind.

7. System nach einem der vorhergehenden Ansprüche, bei dem die mindestens eine Krümmungsvorrichtung mindestens einen Radabschnitt (15, 17) aufweist.

8. System nach Anspruch 7, bei dem der mindestens eine Radabschnitt (15, 17) dazu ausgelegt ist, das Kabel in dem Markierungsbereich gleiten zu lassen.

9. System nach Anspruch 7, bei dem der mindestens eine Radabschnitt (17) eine Vielzahl von Rolllagern aufweist, die das Kabel in dem Markierungsbereich zum Abrollen bringen.

10. System nach Anspruch 7 in Kombination mit Anspruch 4 oder 5, bei dem der mindestens eine Radabschnitt (25) dazu ausgelegt ist, den mindestens einen Antriebsriemen in dem Markierungsbereich gleiten zu lassen.

11. System nach Anspruch 10, bei dem der Radabschnitt eine Vielzahl von Rolllagern aufweist, die den mindestens einen Antriebsriemen in dem Markierungsbereich zum Abrollen bringen.

12. System nach einem der Ansprüche 7 bis 11, bei dem der mindestens eine Radabschnitt (15, 25) feststehend ist.

13. System nach einem der vorhergehenden Ansprüche, bei dem die mindestens eine Antriebsvorrichtung mindestens ein zum Ausführen einer Drehbewegung ausgelegtes Rad (2, 23, 24, 25, 13, 14) aufweist.

14. System nach einem der vorhergehenden Ansprüche, bei dem die Laservorrichtung dazu ausgelegt ist, mindestens einen Laserstrahl auszusenden, der sich gemäß dem Durchtreten des Kabels versetzt.

15. Kabelmarkierungsverfahren mit einem Schritt des
- Antreibens des Kabels, um es in einem Markierungsbereich zum Durchtreten zu bringen,
und **gekennzeichnet durch** die folgenden Schritte:
- Krümmung des Kabels in dem Markierungsbereich und
- Markierung von mindestens einem Teil des Kabels in dem Markierungsbereich **durch** mindestens eine Laservorrichtung, die mindestens einen Laserstrahl aussendet, der in der Markierungsebene, die die Oberfläche des Kabels einschließt, der Krümmungsbahn des Kabels in dem Markierungsbereich folgt.

## Claims

1. Cable marking system comprising:
- at least one laser device,
- at least one marking area (5) for marking a portion of cable (1) by said at least one laser device,
- at least one cable-driving device (2, 9, 10, 11, 13, 14) configured to cause said cable to pass in said at least one marking area, and **characterized by**:
- at least one cable curving device (2, 15, 17) configured to curve said cable in said at least one marking area, in which said at least one laser device is configured to emit at least one laser beam which, in the marking plane encompassing the surface of said cable, follows the curved path of the cable imposed by the curving device.

2. System according to Claim 1, in which said laser beam is normal to said marking plane.

3. System according to one of the preceding claims, in which said at least one driving device comprises an adhering coating in contact with said cable.

4. System according to one of the preceding claims, in which said at least one driving device comprises at least one drive belt (9, 10, 11) configured to drive said cable.

5. System according to Claim 4, in which said at least one driving device comprises at least one pair of drive belts (9, 10) facing one another and configured to accommodate said cable between them.

6. System according to one of the preceding claims, in which said driving device and said cable curving device are integrated in the same device (2).

7. System according to one of the preceding claims, in which said at least one curving device comprises at least one wheel portion (15, 17).

8. System according Claim 7, in which said at least one wheel portion (15, 17) is configured to sallow said cable to slide in said marking area.

9. System according to Claim 7, in which said wheel portion (17) comprises a plurality of rolling bearings for causing said cable to roll in said marking area.

10. System according to Claim 7 in combination with Claim 4 or 5, in which said at least one wheel portion (25) is configured to sallow said at least one belt to slide in said marking area.

11. System according to Claim 10, in which said wheel portion comprises a plurality of rolling bearings for causing said at least one belt to roll in said marking area.

12. System according to one of Claims 7 to 11, in which said at least one wheel portion (15, 25) is fixed.

13. System according to one of the preceding claims, in which said at least one driving device comprises at least one wheel (2, 23, 24, 25, 13, 14) configured to perform a rotational movement.

14. System according to one of the preceding claims, in which said laser device is configured to emit at least one laser beam that moves as a function of the passage of said cable.

15. Cable marking method comprising a step of:
- driving said cable in order to cause it to pass in a marking area,
and **characterized by** the following steps
- curving said cable in said marking area, and
- marking at least a portion of said cable in said marking area, by means of at least one laser device emitting at least one laser beam which, in the marking plane encompassing the surface of said cable, follows the curved path of the cable in the marking area.
